# EUROPEAN PATENT APPLICATION

(11) **EP 3 024 260 A1**
(43) Date of publication of application: **25.05.2016**
(21) Application number: 14194320.9
(22) Date of filing: 21.11.2014
(51) Int. Cl.: H04W 8/24, H04W 12/00

(54) **Method to operate a wireless communication unit**

(71) Applicant: Gemalto M2M GmbH, 81541 München (DE)
(72) Inventor: Lampart, Thomas, 13585 BERLIN (DE)
(74) Representative: Grevin, Emmanuel

(57) **Abstract**

The present invention relates to a method to operate a wireless communication unit, communicatively coupled to an application control unit, the wireless communication unit being configured to operate within a wireless network, the wireless communication unit comprising an open operating platform and a closed operating platform, the open operating platform comprising:
- a set of preinstalled software elements of the wireless communication unit, wherein at least one preinstalled software element is operating related to communication tasks with the wireless network, and
- at least one customer software element being installed by means of the application control unit,
the closed operating platform further being configured to refuse installation of customer software elements, the set of preinstalled software elements comprising a first monitoring element, monitoring behavior of at least one other preinstalled software element, the closed operating platform further comprising a second monitoring element, monitoring behavior of first monitoring element, the method comprising the steps of:
- if first monitoring element indicates that at least one preinstalled software element is not running in accordance with a preinstalled software runtime condition set,
- taking first recovering steps for said preinstalled software element, and
- if second monitoring element indicates that first monitoring element is not running in accordance with a monitoring software runtime condition set,
- taking second recovering steps for first monitoring element.

## Description

### FIELD OF THE INVENTION

The present invention relates to a method for operating a wireless communication unit

The invention also pertains to a wireless communication unit using said method. It further relates to a system using said method.

### BACKGROUND OF THE INVENTION

Generally, in the field of wireless communication it is known that wireless communication devices comprise at least a wireless communication unit and an application control unit. Such wireless communication devices are in particular mobile handsets, tracking & tracing devices, car entertainment units, metering devices or similar devices, configured to be operated in wireless networks, in particular cellular wireless networks supporting ETSI 3GPP technology standards or wireless networks supporting IEEE standard 802.11.

In recent developments said wireless communication units are equipped with multi-core processors who internally run full featured operating systems. Such operating systems, in particular Linux, are usually closed for access from outside, in particular for the application control unit. This is due to security reasons. Further network operator approvals for the wireless communication unit are endangered, when the general behavior of the wireless communication unit, in particular towards the cellular wireless networks, should be modified through a third party, including the wireless communication device manufacturer.

On the other hand, it would be strongly desirable for the wireless communication device manufacturers to make use of the resources of the operating systems, in particular for running applications there, which are in particular able to interact with the application control unit, and reduce resource requirements in the application control unit. This is in particular true as the multi-core processors of the wireless communication units are the majority of time idle. This is in particular true in the area of machine-to-machine-devices, preferably those who regularly or in rare cases submit information to a remote server, like metering devices, emergency call boxes or asset trackers.

It is therefore the goal of present invention to overcome the mentioned disadvantages and to propose a solution that allows access for outside devices to the operating system of the wireless communication unit, without putting the security and approved functionality of the wireless communication unit at risk.

Further alternative and advantageous solutions would, accordingly, be desirable in the art.

### SUMMARY OF THE INVENTION

For this it is according to a first aspect of the invention suggested a method to operate a wireless communication unit according to claim 1. It is further suggested according to a second aspect of the invention a wireless communication unit according to claim 9. It is further proposed according to a third aspect of the invention a system according to claim 14.

According to a first aspect of the invention it is proposed a method to operate a wireless communication unit, communicatively coupled to an application control unit, the wireless communication unit being configured to operate within a wireless network, the wireless communication unit comprising an open operating platform and a closed operating platform, the open operating platform comprising:
- a set of preinstalled software elements of the wireless communication unit, wherein at least one preinstalled software element is operating related to communication tasks with the wireless network, and
- at least one customer software element being installed by means of the application control unit,
the closed operating platform further being configured to refuse installation of customer software elements, the set of preinstalled software elements comprising a first monitoring element, monitoring behavior of at least one other preinstalled software element, the closed operating platform further comprising a second monitoring element, monitoring behavior of first monitoring element, the method comprising the steps of:
- if first monitoring element indicates that at least one preinstalled software element is not running in accordance with a preinstalled software runtime condition set,
- taking first recovering steps for said preinstalled software element, and
- if second monitoring element indicates that first monitoring element is not running in accordance with a monitoring software runtime condition set,
- taking second recovering steps for first monitoring element.

Preferably the wireless communication unit and the application control unit are situated within one wireless communication device. The application control unit and the wireless communication unit according to the prior art are communicating via a command interface which allows sending of instructions from the application control unit to the communication unit.

With the proposed inventive approach it is assured that both the consistency and standard compliance of the wireless communication unit is maintained, but on the other hand the open operating platform is really "open".

An open operating platform, in particular like a Linux system, would not be open, if each customer software element is only allowed to execute if it first registers at a central control unit or the first monitoring element. In particular standard software is not designed for that and would not be possible to run on the operating platform. Hence, the strategy of this invention is less to monitor all customer software, but detect and impede impact on other important components, in particular the preinstalled software elements. Irrespective of that in single cases it is in an advantageous embodiment foreseen further a method comprising the step of monitoring the behavior of at least one of said customer software elements, by means of the first monitoring element.

The first monitoring element moreover forms another preinstalled software element which is incorporated in the open operating platform. For the first monitoring element another security means is introduced with the second monitoring element. Typically both monitoring elements are implemented as daemon processes which monitoring tasks are triggered by a timer.

In the proposed inventive method for each monitored software element a couple of software runtime conditions are to be checked with each monitoring session. It is in particular proposed in an advantageous embodiment a method wherein the software runtime condition set of a preinstalled software element comprises at least one out of a group of:
- the preinstalled software element is running,
- at least one configuration file assigned to the preinstalled software element is unchanged,
- access rights of at least one file assigned to the preinstalled software element are unchanged, and
- the hash value of at least one file assigned to the preinstalled software element is unchanged.

Generally such software runtime conditions apply both to the monitoring software runtime conditions and the preinstalled software runtime conditions. It is however advantageous to introduce additional conditions for the first monitoring element. According to that it is proposed in a further advantageous embodiment that the first monitoring element comprises a digital signature, and the software runtime condition set further comprises the check if the first monitoring element complies with the digital signature. With a digital signature which in particular corresponds to a certificate from a trusted certification agent, it is assured that the signed file or component was provided in that way by the one who signed the component. So this is a security measure and allows immediate detecting if someone manipulated the affected file.

Additionally it is proposed in another advantageous embodiment a method wherein the software runtime condition set for the first monitoring element further comprises that the release number of respective first monitoring element equals the latest release number existing for the first monitoring element, and wherein the recovering step for said software runtime condition comprises updating of the first monitoring element with a software element comprising the latest release number.

This embodiment reveals security risks less in the sense of a customer software element infiltrating preinstalled software elements, but in a growing security gap through software elements for which an update, in particular a security update is available. It is known that in the phase after detection of a security gap in a certain software application, a lot of attacks on such security gaps are started, so-called zero-day exploits. This indicates that a quick reaction is the best assurance against attacks.

Typically the wireless communication unit retrieves the information about new releases of preinstalled software elements, in particular the first monitoring element, by accessing a remote server, in particular but not necessarily triggered by the application control unit. Hence such updating happens according to another preferred embodiment according to a method wherein the recovering step further comprises prior to updating:
- requesting from a remote server an update element for said first monitoring element, and
- downloading the update element from the remote server.

With that the detected unmet software runtime condition of an outdated release number is recovered. Preferably the downloading from the remote server is initiated by the coupled application control unit which makes use of the wireless communication units communication means.

Apart from mentioned recovering step for outdated preinstalled software element, other recovering steps are advantageous for other detected unmet software runtime conditions. In particular it is proposed according to another embodiment a method wherein the recovering steps for the preinstalled software element comprise at least one out of the group of:
- restarting of the preinstalled software element,
- restoring the preinstalled software element,
- outputting of a warning event to the application control unit,
- sending of a warning message to a remote server, and
- shutting down of the wireless communication unit and/or the application control unit.

It is advantageous to pick in the first place an appropriate recovering step depending upon the unmet software runtime condition. In particular if it is detected that the monitored preinstalled software element is not running, it is preferably at first to choose the recovering step of restarting.

Additionally it is part of the invention and advantageous embodiments thereof that the selected recovering step is dependent from the type of monitored software element. It is obvious that the first monitoring element needs to be up and running in the original form. This is potentially less important for another preinstalled software elements, at least this would only affect the functionality of the wireless communication unit, but not of the integrity. Finally, should a customer software element be put under monitoring of the first monitoring element and it is detected that a certain software runtime condition is not met; the simplest approach would be to stop the customer software element from running.

In a further advantageous embodiment it is proposed a method further comprising the steps of:
- after conducting a recovering step, monitoring behavior of recovered preinstalled software element,
- if said preinstalled software element is again not running in accordance with respective software runtime condition set,
- conducting recovering step different from previously executed recovering step.

With this embodiment it is possible to change between the available recovering steps, in particular to escalate the recovering steps, that means after a first simple try e.g. a restart, then - if this does not solve the problem - a more impacting step like a reinstallation is conducted. Finally if the issue is not solvable with the means available on board, the final recovering step would be to shutdown the wireless communication unit, or at least the open operating platform, from operation. This is save in order to prevent harm to the wireless communication unit, the application control unit, the whole wireless communication device and/or the wireless network, the device is operating in. Further, where possible, the application control unit, resp. the whole wireless communication device is shut down. This is preferably done in response to the shutdown of the wireless communication unit, or alternatively in response to an alert message of the wireless communication unit.

According to a second aspect of the invention it is suggested a wireless communication unit, configured to be communicatively coupled to an application control unit, and further configured to operate within a wireless network, the wireless communication unit comprising an open operating platform and a closed operating platform, the open operating platform comprising:
- a set of preinstalled software elements of the wireless communication unit wherein at least one preinstalled software element is operating related to communication tasks with the wireless network, and
- at least one customer software element being installed by means of the application control unit,
the closed operating platform further being configured to refuse installation of customer software elements, the set of preinstalled software elements comprising a first monitoring element, monitoring behavior of at least one other preinstalled software element, the closed operating platform further comprising a second monitoring element, monitoring behavior of first monitoring element, the wireless communication unit further comprising at least two sets of software runtime conditions, encompassing a preinstalled software runtime condition set and a monitoring software runtime condition set, the wireless communication unit further comprises a control unit configured to:
take first recovering steps for said preinstalled software element, if first monitoring element indicates that at least one preinstalled software element is not running in accordance with the preinstalled software runtime condition set, and
take second recovering steps for first monitoring element if second monitoring element indicates that first monitoring element is not running in accordance with the monitoring software runtime condition set.

The second aspect of the invention shares the advantages of the first aspect. According to a third aspect of the invention it is proposed system comprising a wireless communication unit according to second aspect of the invention and an application control unit, the wireless communication unit and the application control unit being communicatively coupled,
wherein the application control unit is configured to install at least one customer software element in the open operating platform of the wireless communication unit.

With that aspect the system of a device comprises the active component of the application control unit and the component of the wireless communication unit, which is mainly dependant of the application control unit, as this controls the whole system. Preferably the system forms a complete wireless communication device.

It is according to this aspect in the responsibility of the application control unit to provide to the open operating platform of the wireless communication unit with customer software elements. Such the customer software elements are preferably stored within a memory of the application control unit. Preferably the customer software elements are downloaded from a remote server or provided via a hardware data storage medium connected to the application control unit, e.g. via USB or others.

In a preferred embodiment it is suggested a system further comprising a memory unit, wherein if the software runtime condition set for said first monitoring element comprises that the release number of respective first monitoring element equals the latest release number existing for the first monitoring element, the system is for recovering said software runtime condition configured to:
- request by means of the wireless communication unit from a remote server an update element for the first monitoring element comprising the latest release number,
- download the update element from the remote server to said memory unit,
- update the first monitoring element with said update element.

With this embodiment it is achieved that if an outdated release number of the first monitoring element is detected during a monitoring step, that the latest release is download from a remote server. For this the wireless communication unit accesses via the wireless network a remote server and executes the download. This download is stored in a memory of the system, preferably situated within the application control unit, rather than the wireless communication unit. From there it is installed to the open operating platform, preferably according to the installation procedure described above for the application control unit. The detection of the release number and the download does not necessarily need to be done in direct connection. It is moreover advantageous if the application control unit regularly checks for such changes on the remote server. Once it is detected that the latest release number of a software element operating in the open operating platform has changed, this information is provided to the wireless communication unit, in particular to the control unit of the wireless communication unit. This is in particular done via an AT command. Preferably depending upon the response from the wireless communication unit, in particular indicating an update desire for the respective software element, the application control unit downloads the newest release of the software element and stores it in a memory unit, preferably being part of the open operating platform.

For the case of the first monitoring element, the process continues in that the second monitoring element initiates the monitoring task, including the test of the latest release number. For that the second monitoring element has now another release number available than the one, the first monitoring element provides. This is detected during the monitoring task, which leads to the recovering step of updating the first monitoring element from the downloaded and stored new release. After the installation has concluded, preferably the first monitoring element is directly restarted. Alternatively this could also be done with the next monitoring session, but would take more time.

In any case after starting the first monitoring element, the next monitoring session carried out by the second monitoring element is supposed to detect no case that one of the set of monitoring software runtime conditions is not met.

As it is shown this invention advantageously solves the depicted problem and offers means for handling customer software element in the open operating platform without putting the integrity of the wireless communication unit and the wireless communication device at risk.

### BRIEF DESCRIPTION OF THE DRAWINGS

The following description and the annexed drawings of advantageous embodiments set forth in detail certain illustrative aspects and are indicative of a few of the various ways in which the principles of the embodiments may be employed. Characteristics and advantages of the present invention will become apparent from the following description and annexed drawings, which are given as illustrative but not restrictive examples of all such aspects and their equivalents.
- Fig. 1: represents a wireless communication device of the type to which the present invention is applied as an embodiment;
- Fig. 2: shows a first sequence diagram showing the sequence of calls according to a first embodiment of present invention;
- Fig. 3: shows a second sequence diagram showing the sequence of calls according to a second embodiment of present invention;
- Fig. 4: shows a third sequence diagram showing the sequence of calls according to third embodiment of present invention;

The same elements have been designated with the same reference numerals in the different drawings. For clarity, only those elements and steps which are useful to the understanding of the present invention have been shown in the drawings and will be described. Moreover, when an action is said to be performed by a device or unit, it is in fact executed by a microprocessor in this device controlled by instruction codes recorded in a program memory on the said device. That terminology is consistent with the manner in which computer scientists refer to the operation of pieces of computer equipment executing pieces of computer software. Of course, when it is stated that a piece of software performs an action, what is intended is that the software contains the instructions that cause the corresponding hardware to perform that action, and, conversely, when it is stated that a piece of hardware performs an action, it is meant that the hardware performs the action as directed by the corresponding software.

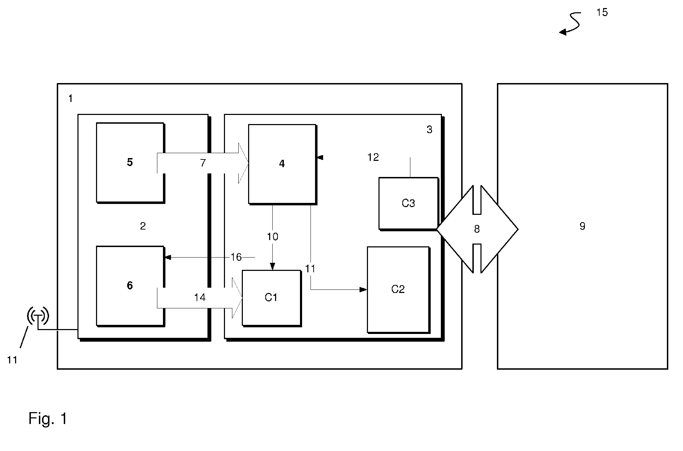

FIG. 1 schematically shows a wireless communication unit 1 of the type to which the present invention is applied as an embodiment. The wireless communication unit 1 is communicatively coupled to an application control unit 9 by means of an external interface 8. As a whole wireless communication unit and application control unit form a system of a device 15. Such device 15 is in particular a wireless communication device, like a metering unit, an on-board-unit of a car, an asset tracker or a point of sales device. The wireless communication device is characterized in that the application control unit controls all handling of the apparatus, in particular including the user interaction via a user interface, in particular with buttons and a display or a touch screen monitor. The wireless communication unit is designed for carrying out all wireless communication tasks with outside servers, in particular for an on-board-unit by sending telematics requests or emergency calls to a service centre, or for a point of sales device by sending payment request to a payment authorization server. The wireless communication unit 1 is in particular a wireless module, also known as machine-to-machine (M2M) module, which comprises all necessary communication components 11 to operate in a wireless network, in particular a cellular wireless network.

The external interface 8 coupling the wireless communication unit 1 and the application control unit 9 is preferably an AT interface, which is implementing the Hayes AT command set dedicated for control of modems.

The wireless communication unit 1 comprises two operating platforms: the closed operating platform 2 and the open operating platform 3. The closed operating platform 2 is characterized by the fact that from outside, in particular through the application control unit, there is no means available to access the closed operating platform 2. In contrast open operating platform 3 is open for access from the application control unit 9 or other units. The open operating platform 3 is configured to install and execute software elements. This is in particular a platform running a common operating system like Linux. The software elements are assigned to at least two groups: preinstalled software elements C1, C2 and customer software elements C3. The preinstalled software elements C1, C2 are provided with the delivered wireless communication unit 1 by the manufacturer of the wireless communication unit. Such a preinstalled software element is in particular a part of the firmware of the wireless communication unit 1. This means that it is operating related to communication tasks with the cellular wireless network, e.g. as part of the AT command interpreter, or other tasks, which in particular are relevant for network operator approval.

A customer software element C3 is a software element which was uploaded by means of the application control unit 9 to the open operating platform 3.

This happens either during manufacturing of the whole wireless communication device, or when the wireless communication device is already in the field.

One special preinstalled software element operating in the open operating platform 3 is the first monitoring element 4. This first monitoring element 4 is dedicated for the task of monitoring the behaviour of the other preinstalled software elements. With this it is assured that the preinstalled software elements are running according to the preinstalled software runtime condition set. This preinstalled software runtime condition set is a set of conditions, which needs to be met by the respective instance of the preinstalled software element. Preferably the preinstalled software runtime condition consists of a couple of monitoring tasks. Such monitoring tasks comprise in particular if the respective preinstalled software element is running. It further tests if the preinstalled software element is unchanged, respective parts of it like configuration files, shared libraries etc. For that task it is foreseen that the first monitoring element 4 upon initial start up or during initialisation of the wireless communication unit 1 creates an inventory of all relevant components of a preinstalled software element C1, C2, in particular of timestamp, size etc. Alternatively or additionally it is advantageous to create a hash value of at least one file assigned to the preinstalled software element and to store this in said inventory. During a monitoring task the hash value is to be created again and to be compared against the stored hash value. Additionally it is also foreseen to analyze access rights of at least one file of the preinstalled software element. The access rights, also known as file system permissions, govern, if a file can be read, written, that means modified, or executed and by whom. In the Linux context the access rights of a file is represented by a bitfield indicating access rights of the owner, members of the group of the owner and all others. A value of 777 would indicate that everyone has all rights for the file. Preferably a predefined secure value of access rights, e.g. 444 (read for all) or 500 (only the owner may read and execute) is given as default, and all files of a software elements are as part of the test checked if this default is matched.

If one of the software runtime conditions is not met, then the first monitoring element 4 informs a control unit 6 of the wireless communication unit 1, the control unit is preferably part of the closed operating platform 2. For that a messaging channel 16 between the first monitoring element 4 and the control unit 6 is foreseen. The control unit 6 is configured to take recovering steps once it is informed about a software runtime condition not met.

The closed operating platform 2 is the platform which holds mainly the firmware of the wireless communication unit 1, and it is configured to refuse installation of customer software element, this in particular means it is not accessible from outside, in particular from the application control unit 9, but also not from the open operating platform.

The closed operating platform 2 further holds the second monitoring element 5 and the control unit 6. The second monitoring element 5 is a unit dedicated for monitoring the first monitoring element 4. For that it basically conducts similar tasks with the first monitoring element 4, as the first monitoring element 4 does with the preinstalled software elements C1, C2. It is as well defined a set of software runtime conditions for the first monitoring element 4, which is the monitoring software runtime condition set. This monitoring software runtime condition set typically comprises similar conditions as the preinstalled software runtime condition set. It is in particular for the first monitoring element 4 advantageous to check in a special test the release number of the software element. This is in particular advantageous if the second monitoring element 5 is aware of the latest release number for the respective software element, which is released. This is preferably done by accessing a remote server who informs about the availability of a new release which is indicated by the newest available release number. If the second monitoring element detects that at least one of the monitoring software runtime conditions is not met, it then informs preferably the control unit 6 which takes recovering measures. In case of the release number test, such recovering measure preferably comprises the downloading and installation of the latest release of the affected software element, in particular the first monitoring element 4. This is preferably done in conjunction with the application control unit 9, which checks for a new release, downloads it and informs the wireless communication unit 1, in particular the control unit 6 of the availability of a new release, and the control unit 6 takes all necessary steps of installing the new release once the mismatch between the release number of the installed software element and the latest release number is detected.

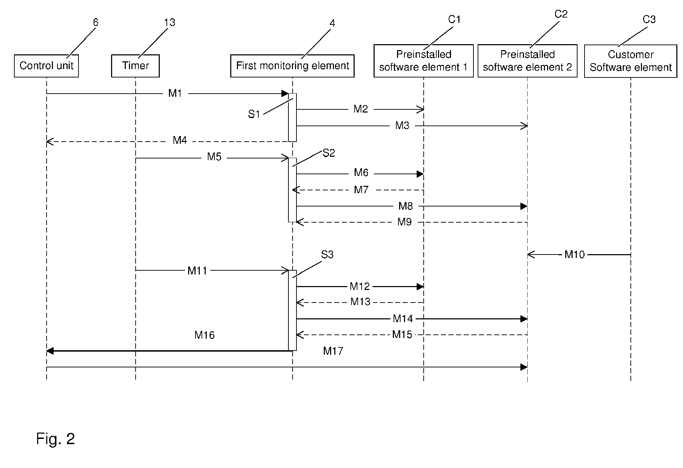

FIG. 2 shows in an exemplifying sequence diagram the behaviour of the first monitoring element 4 according to an embodiment of the invention. The process starts with the initialisation phase where upon start up, in particular first start up of the wireless communication unit 1 the control unit 6 instructs with call M1 the first monitoring element 4 to start an initialisation phase S1, where the first monitoring element 4 checks the preinstalled software elements which are to be monitored. This checking comprises in particular a preconfiguration e.g. in a configuration file, or alternatively a registration request from the preinstalled software element which is about to be monitored. As part of the initialisation the first monitoring element investigates with requests M2, M3 information from preinstalled software element C1 and C2. Those requested information comprise in particular a release number, file timestamps or hash values etc. The first monitoring element 4 stores the relevant information regarding the configured preinstalled software elements C1, C2, and returns a status with message M4 to the control unit, once the initialisation process has concluded.

The initialisation is preferably done with permanent storage of information relating to preinstalled software elements and thus only needs to be executed at first start up of the wireless communication unit 1.

After the start up phase if follows the operating phase. During the operating phase a timer 13 is maintained by the wireless communication unit 1. This timer is preferably situated in connected with the control unit 6. For simplicity reason the timer 13 is displayed as independent active component. Once the timer, preferably a time trigger, is launched it sends a message M5 to the first monitoring element 4. This informs the first monitoring element 4 that is has to start a monitoring session through all configured components.

As part of a monitoring session S2 the first monitoring element 4 investigates the preinstalled software element C1, C2. As part of this it in particular sends at least one request M6, M8 to each configured preinstalled software element C1, C2. The results of the requests are provided with responses M7, M9 to the first monitoring element 4. Within the monitoring session S2 the first monitoring element investigates based on the responses M7, M9 and further acquired information relating to the preinstalled software elements C1, C2 about the status of said monitored preinstalled software elements. Such investigations in particular relate to the running status of the respective preinstalled software element, to the release number or to the status of files belonging to the preinstalled software element, in particular a file timestamp, hash value or access rights.

With the results from the investigations and/or requests the preinstalled software runtime condition set is contested for each preinstalled software element. Out of illustrative reasons in the following the shown requests, like M6, M8, are handled as monitoring request, and the responses, like M7, M9, are handles as results of the monitoring step covering all contested preinstalled software runtime conditions. This is not to be understood that in any case the preinstalled software element needs to be able to actively support the monitoring request launched by the first monitoring element 4.

In this example the responses M7 and M9 indicate that all tests where successful, that means preinstalled software elements C1, C2 both fulfil the complete preinstalled software runtime condition set.

Preferably, according to this example the first monitoring element 4 is configured not to report a successful execution of the monitoring session to other components. Preferably the result is documented in a logfile. In alternative solutions the control unit 6 or a special monitoring unit is informed also about successful execution of the monitoring session S2.

In the next step a customer software element being part of the open operating platform executes operation M10 which affects the behaviour of a preinstalled software element C2. Such an operation is as an example the exchange of a shared library by a modified library, which is dedicated to cause harm to the wireless communication unit 1 or to modify the behaviour of the wireless communication unit in the wireless network, be it accidentally or fraudulently. Such shared library is in particular used by a preinstalled software element dedicated for operating in relation to communication tasks with a base station of the cellular wireless network the wireless communication unit is currently operating in. An example for such preinstalled software element is a part of an AT command interpreter. A modification of such a library would affect the network operator approval of the whole wireless communication unit.

The next monitoring session S3, triggered with message M11, is expected to figure this out. For preinstalled software element C1 the monitoring request M12 shows with the results provided with response M13 that everything went fine. For preinstalled software element C2 the monitoring request M14 relates at least to a test if all involved components, in particular libraries, are unchanged. The test fails. As a result immediately or after fulfilling more tests, a message M15 is provided to the first monitoring element 4, indicating a failure of a software runtime condition for preinstalled software element C2. In response to this, the first monitoring element 4 sends an alert message M16 with sufficient information at least indicating the affected preinstalled software element C2 to the control unit 6.

The control unit 6 is configured to take recovering steps in case it receives such an alert message. In this case the recovering step M17 comprises preferably a reinstallation of the modified shared library. This leads to the situation that after the modification of the library through the customer software element C3 is detected, the initial status is reestablished and the wireless communication unit 1 can continue operation as before.

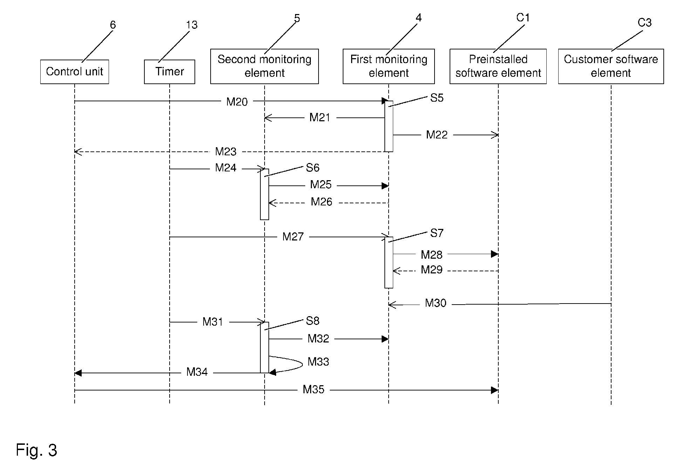

FIG. 3 shows in an exemplifying sequence diagram the behaviour of the second monitoring element 5.

The beginning of the process starts similar to the one shown in FIG. 2. Again the control unit 6 starts with message M20 at the first monitoring element 4 the registration session S5. In this case the first monitoring element 4 additionally registers itself at the second monitoring element 5 with message M21. Further all preinstalled software elements are preconfigured for monitoring at the first monitoring element 4, in this example it is one preinstalled software element C1. At the end the control unit 6 is informed with message M23 by the first monitoring element 4 about finishing the start up phase.

In the following the monitoring sessions are shown. The first starts through a timer 13 which informs with message M24 the second monitoring element 5 about the start of a monitoring session S6 for the second monitoring element 5. It sends a monitoring message M25 to the first monitoring element 4. As part of this, it is to be checked if the first monitoring element fulfills all conditions of the monitoring software runtime condition set. Again this is done by one or more requests, and preferably further investigations from the second monitoring element. In this case the first monitoring element is expected to provide more capabilities to support the monitoring, and thus returns in response M26 relevant information to the second monitoring element 5 for contesting the monitoring software runtime conditions. The monitoring software runtime condition set comprises similar software runtime conditions as set out before.

In this case all tests were successfully passed. Therefore no further steps need to be initiated by the second monitoring element.

Afterwards the timer 13 initiates the first monitoring element 4 to conduct the monitoring steps in monitoring session S7. Here the messages M28, M29 corresponds to messages M6/M7 shown in FIG. 2.

Now in a later step the customer software element C3 again carries out operations modifying preinstalled software elements in the open operating platform 3. In this case the first monitoring element 4 is modified by operation M30. In this case the customer software element C3 stops the execution of the first monitoring element, that means the process is killed. After that the customer software element C3 could modify other preinstalled software elements C1, C2, without any notice.

But after another time period supervised by the timer 13 it is initiated the next monitoring session S8 at the second monitoring element 5, which sends a monitoring message M32 to the first monitoring element 4. Typically this first test is to figure out if the process is running in a sense of a still alive request. For that preferably the first monitoring element 4 would have to answer within a given time period with a response message. When the time period expires without an answer, this indicates that the first monitoring element 4 is not running well or at least is unable to answer requests, which means it has hung up. In this case the second monitoring element 5 notices with message M33 itself, that something is wrong and the test failed, hence that the first monitoring element 4 is not running as expected.

This second monitoring element consequently alerts with message M34 the control unit 6 about this situation. The control unit 6 thus takes recovering steps by sending a start command M35 to the first monitoring element 4. This recovers the situation caused by the customer software element C3, and any operations in the meantime from the customer software element C3 affecting other preinstalled software elements C1 would also be detected once the first monitoring element 4 is triggered to carry out another monitoring session.

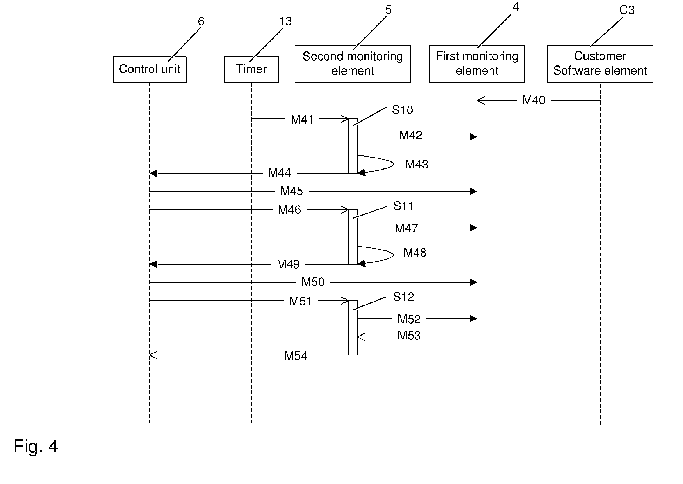

FIG. 4 describes the situation like previously described when the second monitoring element 5 detects that first monitoring element 4 has been affected by a modification M40 from customer software element C3, but the first recovering step is not successful. After the modification M40 the timer 13 triggers as described for FIG. 3 a monitoring session S10 with a monitoring message M42 and in message M43 the second monitoring element 5 detects that at least one condition of the monitoring software runtime condition set was not met. In this case again the first monitoring element 4 was not running. This leads to the alert message M44 from the second monitoring element 5 to the control unit 6, which in response issued a recovering step M45 in order to start the first monitoring element 4 again. In this exemplifying embodiment is then the control unit 6 which launches the monitoring session S11 with message M46 to the second monitoring element 5, in order to find out if the recovering step was successful. Alternatively it could have waited until the timer 13 launches this monitoring session, but it is safer to immediately check the result of the recovering step as a vulnerability was detected and it is paramount to reduce the time until this detected vulnerability is removed.

Consequently the second monitoring element 5 as usual starts during monitoring session S11 a monitoring request M47 to first monitoring element 4. Due to the fact that not only the first monitoring element process was stopped by the customer software element C3, but also a library was removed or changed, the restart of the first monitoring element 4 following recovering step M45 failed. In an alternative situation the first monitoring element 4 successfully started, but with the monitoring request M47 the second monitoring unit figures out, that a library was exchanged, in particular by means of a digital signature of the first monitoring element.

This information is indicated to the control unit 6 with the alert message M49. With this the control unit 6 knows about the failed recovering step and consequently has to take a different recovering step. This kind of escalation assures that a never-ending restart of the first monitoring element 4 would leave the vulnerability open.

In this case the recovering step M50 comprises that modified files of the first monitoring element 4 are replaced by their original files. This is in particular achieved by a complete new installation of the first monitoring element 4. In any case this requires that the original files of the first monitoring element 4 are accessible for the control unit, in particular stored in the closed operating platform 2.

Again with M51 the control unit 6 launches another monitoring session S12, wherein the second monitoring element 5 sends a monitoring request M52 to the first monitoring element 4. In this case first monitoring element 4 indicates with message M53 that it is up and running, and consequently fully meets the complete set of monitoring software runtime conditions. This is indicated with message M54 to the control unit 6 which therefore concludes the recovering actions. If M53 would still have indicated that first monitoring element 4 is not working according to the set of monitoring software runtime conditions, the next escalation step for recovering this situation would have to be taken by the control unit 6. In particular this could mean that the situation is not recoverable for the wireless communication unit 1, which would mean that the wireless communication unit 1 would shut down its operation in order to avoid any harm caused by the customer software element C3.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to operate a wireless communication unit (1), communicatively coupled to an application control unit (9), the wireless communication unit (1) being configured to operate within a wireless network,
the wireless communication unit comprising an open operating platform (3) and a closed operating platform (2), the open operating platform comprising:
- a set of preinstalled software elements (C1, C2, 4) of the wireless communication unit (1), wherein at least one preinstalled software element is operating related to communication tasks with the wireless network, and
- at least one customer software element (C3) being installed by means of the application control unit (9),
the closed operating platform (2) further being configured to refuse installation of customer software elements (C3),
the set of preinstalled software elements (C1, C2, 4) comprising a first monitoring element (4), monitoring behavior of at least one other preinstalled software element (C1, C2),
the closed operating platform (2) further comprising a second monitoring element (5), monitoring behavior of first monitoring element (4),
the method comprising the steps of:
- if first monitoring element (4) indicates that at least one preinstalled software element (C1, C2) is not running in accordance with a preinstalled software runtime condition set,
- taking first recovering steps for said preinstalled software element (C1, C2), and
- if second monitoring element (5) indicates that first monitoring element (4) is not running in accordance with a monitoring software runtime condition set,
- taking second recovering steps for first monitoring element (4).

2. Method according to claim 1,
further comprising the step of monitoring the behavior of at least one of said customer software elements (C3), by means of the first monitoring element (4).

3. Method according to at least one of the claims 1 and 2,
wherein the software runtime condition set of a preinstalled software element comprises at least one out of a group of:
- the preinstalled software element (C1, C2) is running,
- at least one configuration file assigned to the preinstalled software element (C1, C2) is unchanged,
- access rights of at least one file assigned to the preinstalled software element (C1, C2) are unchanged, and
- the hash value of at least one file assigned to the preinstalled software element (C1, C2) is unchanged.

4. Method according to one of the previous claims
wherein the recovering steps for the preinstalled software element (C1, C2) comprise at least one out of the group of:
- restarting of the preinstalled software element (C1, C2),
- restoring the preinstalled software element (C1, C2),
- outputting of a warning event to the application control unit (9),
- sending of a warning message to a remote server, and
- shutting down of the wireless communication unit (1) and/or the application control unit (9).

5. Method according to claim 4,
the method further comprising the steps of:
- after conducting a recovering step, monitoring behavior of recovered preinstalled software element (C1, C2),
- if said preinstalled software element (C1, C2) is again not running in accordance with respective software runtime condition set,
- conducting recovering step different from previously executed recovering step.

6. Method according to at least one of the previous claims,
wherein the first monitoring element (4) comprises a digital signature,
and the software runtime condition set further comprises the check if the first monitoring element (4) complies with the digital signature.

7. Method according to at least one of the previous claims,
wherein the software runtime condition set for the first monitoring element (4) further comprises that the release number of respective first monitoring element (4) equals the latest release number existing for the first monitoring element (4),
and wherein the recovering step for said software runtime condition comprises updating of the first monitoring element (4) with a software element comprising the latest release number.

8. Method according to claim 7,
wherein the recovering step further comprises prior to updating:
- requesting from a remote server an update element for said first monitoring element (4), and
- downloading the update element from the remote server.

9. Wireless communication unit (1) configured to be communicatively coupled to an application control unit (9), and further configured to operate within a wireless network,
the wireless communication unit comprising an open operating platform (3) and a closed operating platform (2), the open operating platform (3) comprising:
- a set of preinstalled software elements (C1, C2, 4) of the wireless communication unit (1) wherein at least one preinstalled software element is operating related to communication tasks with the wireless network, and
- at least one customer software element (C3) being installed by means of the application control unit (9),
the closed operating platform (2) further being configured to refuse installation of customer software elements (C3),
the set of preinstalled software elements (C1, C2, 4) comprising a first monitoring element (4), monitoring behavior of at least one other preinstalled software element (C1, C2),
the closed operating platform (2) further comprising a second monitoring element (5), monitoring behavior of first monitoring element (4),
the wireless communication unit (1) further comprising at least two sets of software runtime conditions, encompassing a preinstalled software runtime condition set and a monitoring software runtime condition set,
the wireless communication unit (1) further comprises a control unit (6) configured to:
take first recovering steps for said preinstalled software element (C1, C2), if first monitoring element (4) indicates that at least one preinstalled software element (C1, C2) is not running in accordance with the preinstalled software runtime condition set, and
take second recovering steps for first monitoring element (4) if second monitoring element (5) indicates that first monitoring element (4) is not running in accordance with the monitoring software runtime condition set.

10. Wireless communication unit (1) according to claim 9,
wherein at least one software runtime condition set comprises at least one out of a group of:
- the preinstalled software element (C1, C2) is running,
- at least one configuration file assigned to the preinstalled software element (C1, C2) is unchanged,
- access rights of at least one file assigned to the preinstalled software element (C1, C2) are unchanged, and
- the hash value of at least one file assigned to the preinstalled software element (C1, C2) is unchanged.

11. Wireless communication unit (1) according to at least one claim 9 or 10, wherein as recovering steps for the preinstalled software element (C1, C2) the wireless communication unit (1) is configured to conduct at least one out of the group of:
- restart of the preinstalled software element (C1, C2),
- restore the preinstalled software element (C1, C2),
- output of a warning event to the application control unit (9),
- send of a warning message to a remote server, and
- shut down of the wireless communication unit (1) and/or the application control unit (9).

12. Wireless communication unit (1) according to claim 11,
wherein the wireless communication unit (1) is further configured to:
- after conducting a recovering step monitor behavior of recovered preinstalled software element (C1, C2),
- if said preinstalled software element (C1, C2) is again not running in accordance with respective software runtime condition set conduct recovering step different from previously executed recovering step.

13. Wireless communication unit (1) according to at least one of the claims 9 to 12,
wherein the software runtime condition set for the first monitoring element (4) further comprises that the release number of respective first monitoring element (4) equals the latest release number existing for the first monitoring element (4),
and wherein wireless communication unit (1) is for recovering said software runtime condition further configured to update the first monitoring element (4) with a software element comprising the latest release number.

14. System (15) comprising a wireless communication unit (1) according to claim 9 and an application control unit (9), the wireless communication unit (1) and the application control unit (9) being communicatively coupled, wherein the application control unit (9) is configured to install at least one customer software element (C3) in the open operating platform (3) of the wireless communication unit (1).

15. System according (15) to claim 14,
the system further comprising a memory unit,
wherein if the software runtime condition set for said first monitoring element (4) comprises that the release number of respective first monitoring element (4) equals the latest release number existing for the first monitoring element (4), the system is for recovering said software runtime condition configured to:
- request by means of the wireless communication unit (1) from a remote server an update element for the first monitoring element (4) comprising the latest release number,
- download the update element from the remote server to said memory unit, and
- update the first monitoring element (4) with said update element.
